(19) Europäisches Patentamt

European Patent Office

Office européen des brevets

(11) **EP 0 932 036 B1**

(12) **FASCICULE DE BREVET EUROPEEN**

(45) Date de publication et mention
de la délivrance du brevet:
**31.05.2006 Bulletin 2006/22**

(51) Int Cl.:
***G01N 15/08*** *(2006.01)*

(21) Numéro de dépôt: **99400024.8**

(22) Date de dépôt: **07.01.1999**

(54) **Perméamètre à large plage de mesure**

Permeameter mit grossem Messbereich

Permeameter with large measuring range

(84) Etats contractants désignés:
**AT CH DE FR GB LI**

(30) Priorité: **22.01.1998 FR 9800760**

(43) Date de publication de la demande:
**28.07.1999 Bulletin 1999/30**

(73) Titulaire:**SOCIETE NATIONALE D'EXPLOITATION
INDUSTRIELLE DES TABACS ET ALLUMETTES
Société Anonyme française
75340 Paris Cédex 07 (FR)**

(72) Inventeur: **Cholet, Georges
45770 Saran (FR)**

(74) Mandataire: **de Saint-Palais, Arnaud Marie et al
CABINET MOUTARD
35 Rue de la Paroisse
BP 513
78005 Versailles Cedex (FR)**

(56) Documents cités:
**US-A- 4 651 557      US-A- 4 838 483
US-A- 4 864 845      US-A- 4 965 756**

EP 0 932 036 B1

Printed by Jouve, 75001 PARIS (FR)

## Description

La présente invention concerne un perméamètre, c'est-à-dire un appareil destiné à mesurer la perméabilité à l'air de matières poreuses pouvant se présenter notamment sous la forme de feuilles.

Elle s'applique en particulier, mais non exclusivement, à la mesure de la perméabilité à l'air de papiers, gainages et/ou manchettes de cigarettes.

Un tel appareil est divulgué par le document US-A-4 651 557.

D'une manière générale, on sait que pour effectuer la mesure de la perméabilité d'une épreuve pouvant consister en un objet de forme quelconque, on soumet deux faces opposées de cette épreuve à une différence de pression de manière à provoquer, dans la matière comprise entre ces deux faces, un courant d'air dont on mesure le débit.

Cette différence de pression peut être obtenue soit en engendrant une dépression au niveau de l'une des faces et en portant l'autre face à la pression atmosphérique, soit, à l'inverse, en soumettant l'une des faces à une pression d'air tandis que l'autre face est portée à la pression atmosphérique.

La mesure du débit d'air traversant l'épreuve est alors obtenue en maintenant constante la dépression ou la pression appliquée à l'épreuve et en mesurant à l'aide d'un débitmètre le flux d'air circulant dans le circuit engendrant, selon le cas, la dépression ou la pression.

Conformément à la norme ISO 2695 et à la recommandation CORESTA No 40, la valeur UC de la perméabilité à une pression donnée est alors obtenue à partir de la formule suivante :

$$UC = \frac{Q(\text{cm}^3/\text{mn})}{A(\text{cm}^2) \cdot d\,(\text{kPa})}$$

formule dans laquelle:

d   est l'écart de pression entre les deux faces de l'épreuve (généralement 1 kPa)

Q   est le débit d'air traversant une section A de l'épreuve (généralement 2 cm$^2$) définie par la tête de mesure.

Il s'avère que la perméabilité des objets et, en conséquence, les débits d'air à mesurer sont très variables.

Par ailleurs, il est fréquemment utile de mesurer sur la même épreuve le débit à deux différentes pressions (ou dépressions), généralement 0,25 kPa et 1 kPa, en vue de déterminer un coefficient (appelé coefficient de persillage) qui exprime la linéarité de la caractéristique débit/pression.

Enfin, il peut être souhaitable d'effectuer un tracé des caractéristiques débit/pression du flux d'air traversant l'épreuve, notamment en vue d'en déterminer l'équation exacte.

Compte tenu du fait que pour effectuer un tel tracé on doit nécessairement faire varier la pression (ou la dépression) selon une très large plage, le problème résultant de l'exiguïté de la plage de mesure du débitmètre se pose d'une façon particulièrement aiguë. Ce problème imposait jusqu'ici une intervention de l'opérateur pour effectuer les changements d'échelle. L'automatisation totale de ce type de mesure n'était donc pas concevable.

L'invention a donc plus particulièrement pour but la réalisation d'un perméamètre qui permette une telle automatisation sans qu'il en résulte une altération des résultats de la mesure.

Ce perméamètre fait intervenir une tête de mesure permettant d'emprisonner l'épreuve au moins partiellement et de façon étanche, et comprenant deux chambres donnant respectivement sur deux faces distinctes de l'épreuve, l'une de ces chambres, dite chambre de mesure, étant raccordée à un circuit de mesure comprenant successivement au moins un débitmètre et des moyens de pompage aptes à engendrer dans le circuit de mesure une pression ou une dépression, des moyens de régulation étant prévus pour maintenir le circuit de mesure à une pression déterminée.

Selon l'invention, ce perméamètre est caractérisé en ce qu'il comprend un circuit électronique de traitement comprenant une pluralité d'amplificateurs calibrés dont les entrées sont reliées à la sortie analogique du débitmètre et dont les sorties sont connectées à des entrées respectives d'un multiplexeur, piloté par un processeur. La sortie de ce multiplexeur est, quant à elle, reliée à l'entrée d'un convertisseur analogique/numérique dont la sortie est connectée au processeur.

Ce processeur est programmé de manière à assurer à la fois la commande du multiplexeur et d'un générateur de valeurs de consigne de pression des susdits moyens de régulation et à calculer la perméabilité de l'objet en fonction de la valeur de pression et de la valeur de débit qu'il reçoit sous forme numérique du convertisseur analogique/numérique.

Selon une particularité de l'invention, la tension de sortie du débitmètre est appliquée à l'entrée d'une pluralité d'amplificateurs.

Grâce à cette disposition, il devient possible d'effectuer avec une excellente résolution la mesure du débit détecté dans le circuit de mesure pour de très larges gammes de débit.

Un mode d'exécution de l'invention sera décrit ci-après, à titre d'exemple non limitatif, avec référence aux dessins annexés dans lesquels :

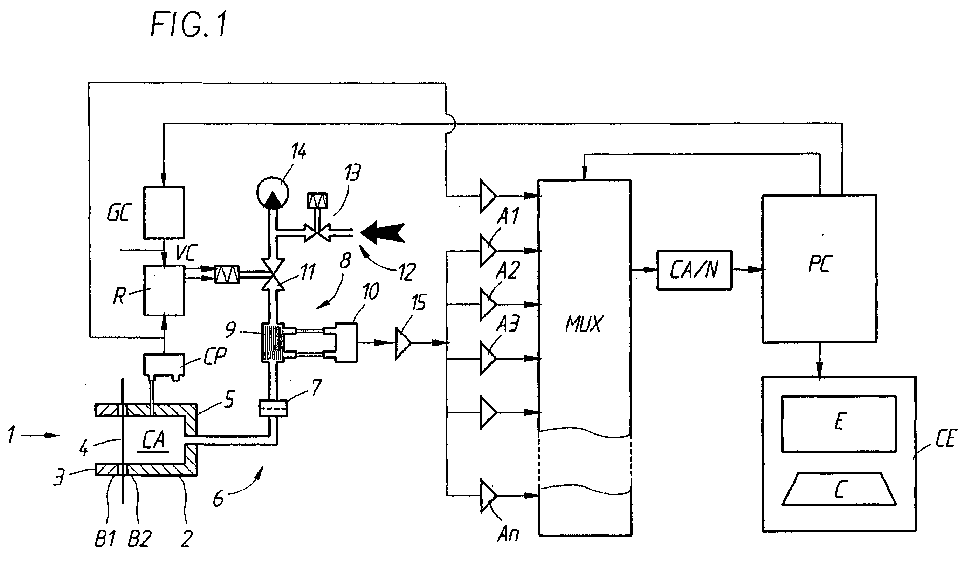

La figure 1 est un schéma théorique d'un perméamètre automatique permettant une mesure rapide et précise de la perméabilité de feuilles de papier ;

La figure 2 est un diagramme tension/débit représentant les courbes de variation de sortie des amplificateurs calibrés prévus en sortie du débitmètre du perméamètre représenté figure 1.

Dans cet exemple, le perméamètre comprend une tête 1 de mesure comprenant deux parties tubulaires cylindriques 2, 3 sensiblement de même diamètre, mobiles l'une par rapport à l'autre et pouvant se disposer coaxialement l'une vis-à-vis de l'autre pour venir en butée l'une contre l'autre en serrant entre leurs bords annulaires radiaux $B_1$, $B_2$ une feuille de papier 4 qui constitue ici l'épreuve dont on veut mesurer la perméabilité. Ces bords annulaires radiaux $B_1$, $B_2$ peuvent être revêtus d'une garniture permettant de garantir une bonne étanchéité entre les deux parties 2, 3 de la tête 1 et la feuille de papier 4. La partie tubulaire 3 est ouverte à ses deux extrémités tandis que la partie tubulaire 2 comprend un fond 5 situé du côté opposé au bord $B_1$, de manière à délimiter une chambre d'aspiration CA refermée par la feuille 4.

Cette chambre CA communique avec un conduit d'aspiration 6 comprenant successivement :

- un filtre 7 destiné à empêcher que des particules de matière ne soient aspirées dans le conduit d'aspiration et ne vienne ensuite perturber les mesures ;

- un débitmètre 8 comprenant un organe déprimogène 9 monté en série dans le conduit d'aspiration 6 et un capteur de pression 10 mesurant l'écart de pression entre l'entrée et la sortie de cet organe déprimogène 9 ;

- une électrovanne de régulation 11 ;

- un circuit de mise à la pression atmosphérique 12 commandé par une électrovanne 13 ; et

- une pompe aspirante 14 (ou tout autre générateur de vide).

La pression à l'intérieur de la chambre CA est mesurée par un capteur de pression CP relié par sa sortie à un convertisseur analogique/numérique CA/N et à un circuit d'asservissement R qui commande l'électrovanne 11 en fonction de l'écart entre la valeur de la pression mesurée par le capteur CP et une valeur de consigne VC imposée par un convertisseur numérique/analogique CN/A GC piloté par le processeur PC selon un programme de mesure.

Le signal analogique délivré par le capteur de pression 10 est appliqué, après filtrage et préamplification (préamplificateur 15), sur les entrées d'une pluralité d'amplificateurs calibrés $A_1$, $A_2$, $A_3$, $A_n$ dont les sorties sont reliées à des entrées respectives d'un multiplexeur MUX piloté par un processeur PC.

La sortie de ce multiplexeur MUX est connectée à l'entrée d'un convertisseur analogique/numérique CA/N qui transmet successivement au processeur PC les valeurs numériques correspondant aux tensions délivrées par les amplificateurs $A_1$ ... $A_n$.

Le processeur PC est couplé à une console clavier/écran CE et est relié au générateur de valeur de consigne GC associé au circuit d'asservissement R.

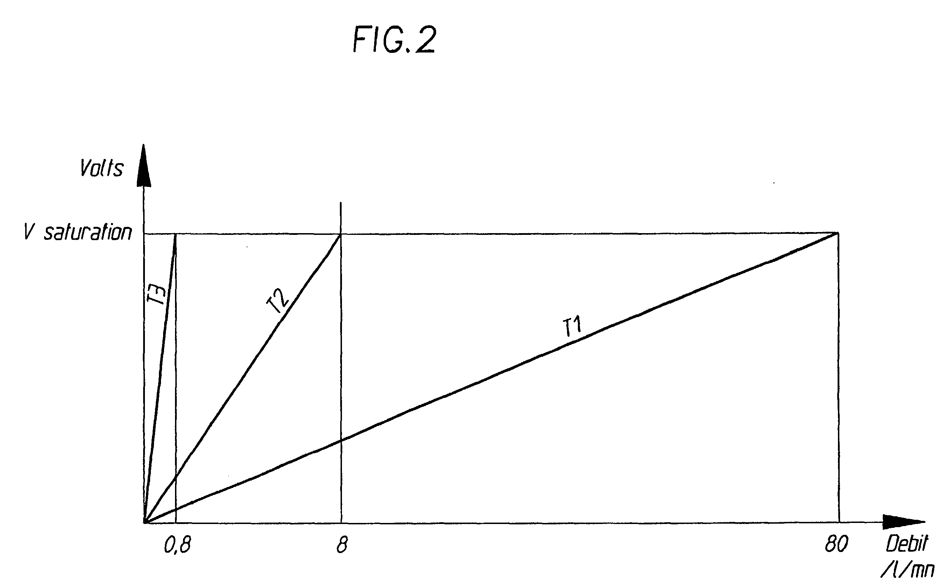

Le fonctionnement de ce dispositif est illustré sur la figure 2 qui comprend un diagramme montrant une courbe de variation tension de sortie des amplificateurs $A_1$ ... $A_n$/débit. Dans ce diagramme, les courbes $T_1$, $T_2$, $T_3$ correspondent respectivement aux tensions délivrées par les amplificateurs $A_1$, $A_2$, $A_3$. Les gains de ces amplificateurs $A_1$, $A_2$, $A_3$ sont respectivement de 1, 10, 100.

Sous la commande du processeur PC, le multiplexeur MUX applique successivement les tensions de sortie des amplificateurs $A_1$, $A_2$, $A_3$ sur l'entrée du convertisseur analogique/numérique CA/N, étant entendu qu'à un instant donné, seule la plus grande de ces tensions de sortie mais inférieure à la tension de saturation est prise en considération.

Comme précédemment mentionné, le processeur PC assure la commande des valeurs de consigne du circuit de régulation de pression R. Ainsi, le processeur pourra effectuer le tracé de la courbe pression/débit sur l'écran E ou sur une imprimante en commandant une séquence comportant une succession de cycles comprenant chacun, en partant d'une valeur minimale de pression de consigne :

- une incrémentation $\Delta p$ de la pression de consigne,
- une stabilisation de la pression nouvellement acquise,
- la mesure analogique du débit,
- la détermination de la valeur numérique du débit par multiplexage des tensions de sortie des amplificateurs $A_1$ ... $A_n$, avec conversion analogique/numérique desdites tensions, et correction éventuelle des résultats pour tenir compte des variations de gain entre les amplificateurs $A_1$ ... $A_n$,
- la mesure analogique de la pression réelle,
- la détermination de la valeur numérique de la pression par conversion A/N,
- la mémorisation du couple pression/débit mesuré dans une mémoire associée au processeur PC.

Bien entendu, lorsque la totalité des couples débit/pression correspondant à la plage de variation de pression de la courbe pression/débit que l'on souhaite relever a été mémorisée, le processeur PC peut alors exécuter à l'écran E ou sur l'imprimante un tracé de la courbe et calculer la perméabilité selon la formule précédemment évoquée ainsi que le coefficient de persillage caractérisant la relation débit/pression conformément au processus suivant :

- L'établissement successif dans la chambre CA de pressions de 0,25 kPa et de 1,00 kPa.

- La mémorisation des débits d'air respectifs $Q_1$ et $Q_2$ ($cm^3$ $min^{-1}$) relevés pour ces deux pressions.
- Le calcul du ratio Y par la formule :

$$Y = (Q_1 / Q_2) \times (1{,}0 / 0{,}25)$$

- La répétition de cette procédure pour d'autres épreuves et le calcul de la moyenne des valeurs obtenues pour la valeur Y.
- Si la valeur moyenne de Y ne s'écarte pas plus de 2 % de la valeur 1,00 (ou en pratique ne dépasse pas 1,02), la relation débit/pression est linéaire. Dans le cas contraire, cette relation sera considérée comme non-linéaire.
- S'il s'avère que le matériau d'essai a des caractéristiques de débit/pression non-linéaires, la mesure du débit d'air pour une seule différence de pression n'est pas suffisante pour caractériser le matériau. Le débit d'air doit être également déterminé en utilisant la deuxième différence de pression de 0,25 kPa.

Typiquement, l'appareil précédemment décrit pourra comprendre 3 grammes de mesure automatiques de débit :

| | |
|---|---|
| $0 \rightarrow 800$ $cm^3$/mn | résolution 0,3 $cm^3$/mn |
| $800 \rightarrow 8000$ $cm^3$/Mn | résolution 3 $cm^3$/mn |
| $8000 \rightarrow 80\ 000$ $cm^3$/mn | résolution 30 $cm^3$/mn |

La régulation de la pression d'épreuve étant comprise entre 0 et 2 kPa avec une précision de la pression de 0,001 kPa.

Cet appareil pourra présenter trois types de fonctionnement :

- mesure à 1 seule valeur de dépression (généralement 1 kPa) ;
- mesure à 2 dépressions successives (généralement 1 kPa et 0,25 kPa) avec calcul du coefficient de persillage ;
- tracé de la caractéristique débit/pression (la pression variant de 0 à 2 kPa) avec calcul du coefficient de persillage.

**Revendications**

1. Perméamètre du type comportant une tête de mesure (1) permettant d'emprisonner l'épreuve (4) au moins partiellement et de façon étanche, cette tête de mesure (1) comprenant deux chambres donnant respectivement sur deux faces distinctes de l'épreuve, l'une de ces chambres (CA) étant raccordée à un circuit de mesure (6) comportant successivement au moins un débitmètre analogique (8) et des moyens de pompage (14) aptes à engendrer dans le circuit de mesure (6) une pression ou une dépression, des moyens de régulation (CP, R, 11) étant prévus pour maintenir le circuit de mesure (6) à une pression déterminée,
**caractérisé en ce qu'**il comprend un circuit électronique de traitement comprenant une pluralité d'amplificateurs ($A_1$ ... $A_n$) calibrés dont les entrées sont reliées à la sortie analogique du débitmètre (8) et dont les sorties sont connectées à des entrées respectives d'un multiplexeur (MUX), piloté par un processeur (PC), la sortie de ce multiplexeur (MUX) étant reliée à l'entrée d'un convertisseur analogique/numérique (CA/N) dont la sortie est connectée au processeur (PC).

2. Perméamètre selon la revendication 1,
**caractérisé en ce que** le processeur (PC) est programmé de manière à assurer à la fois la commande du multiplexeur (MUX) et d'un générateur de consigne de pression (GC) des susdits moyens de régulation (R).

3. Perméamètre selon l'une des revendications 1 et 2,
**caractérisé en ce que** le processeur (PC) est programmé de manière à calculer la perméabilité de l'objet en fonction de la valeur de pression établie dans la chambre de mesure (CA) et de la valeur de débit qu'il reçoit sous forme numérique du convertisseur analogique/numérique (CA/N).

4. Perméamètre selon l'une des revendications précédentes,
**caractérisé en ce que** le processeur (PC) commande le multiplexeur (MUX) successivement les tensions de sortie des amplificateurs ($A_1$, $A_2$, $A_3$) sur l'entrée du convertisseur analogique/numérique (CA/N) et prend, à chaque instant en considération la plus grande de ces tensions de sortie mais inférieure à la tension de saturation desdits amplificateurs.

5. Perméamètre selon la revendication 2,
**caractérisé en ce que** le susdit générateur de consigne de pression (GC) est piloté par le processeur (PC).

6. Perméamètre selon la revendication 5,
**caractérisé en ce que** le processeur est programmé de manière à relever la courbe pression/débit grâce à une séquence comportant une succession de cycles comprenant chacun, en partant d'une valeur minimale de pression de consigne :

- une incrémentation ($\Delta p$) de la pression de consigne,
- une stabilisation de la pression et l'acquisition de sa valeur,

- la mesure analogique du débit,
- la détermination de la valeur numérique du débit par multiplexage des tensions de sortie des amplificateurs ($A_1$ ... $A_n$), avec conversion analogique/numérique desdites tensions, et correction éventuelle des résultats pour tenir compte des variations de gain entre les amplificateurs ($A_1$ ... $A_n$),
- la mémorisation du couple pression/débit mesuré dans une mémoire associée au processeur (PC).

7. Perméamètre selon l'une des revendications précédentes,
   **caractérisé en ce que** le processeur (PC) calcule le coefficient de persillage caractérisant la relation débit/pression conformément au processus suivant :

   - l'établissement successif dans la chambre (CA) de pressions de consigne de 0,25 kPa et de 1,00 kPa,
   - la mémorisation des débits d'air respectifs $Q_1$ et $Q_2$ (cm$^3$ min$^{-1}$) relevés,
   - le calcul du ratio Y par la formule :

$$Y = (Q_1 / Q_2) \times (1,0 / 0,25)$$

   - la répétition de cette procédure pour plusieurs épreuves, et
   - le calcul de la moyenne des valeurs Y ainsi obtenues.

**Claims**

1. Permeameter of the type comprising a measuring head enabling the test piece to be at least partially imprisoned in an airtight manner, this measuring head comprising two chambers opening respectively onto two separate sides of the test piece, one of these chambers being connected to a measuring circuit successively comprising at least one analog flow meter and a pumping means capable of generating pressure or a partial vacuum in the measuring circuit, an adjusting means being provided to maintain the measuring circuit at a given pressure, **characterized in that** it comprises an electronic circuit comprising a plurality of calibrated amplifiers of which the inputs are connected to the analog output of the flow meter and of which the outputs are connected to respective inputs of a multiplexer driven by a processor, the output of this multiplexer being connected to an analog-to-digital converter of which the output is connected to the processor.

2. Permeameter as claimed in claim 1, **characterized in that** the processor is programmed to control both the multiplexer and a generator of set pressure values on the aforesaid adjusting means.

3. Permeameter as claimed in claims 1, **characterized in that** the processor is programmed to compute the permeability of the object as a function of the pressure value established in the measurement chamber and the flow value it receives in digital form from the analog-to-digital converter.

4. Permeameter as claimed in any preceding claim, **characterized in that** the processor instructs the multiplexer to successively apply the output voltages of the amplifiers to the input of the analog-to-digital converter, and, at all times, only takes into consideration the highest of these output voltages below the saturation voltage of said amplifiers.

5. Permeameter as claimed in claim 2; **characterized in that** the said set pressure value generator is driven by the processor.

6. Permeameter as claimed in claim 5, **characterized in that** the processor is programmed to plot the pressure / flow rate curve by way of a sequence comprising a succession of cycles each including the following, working from a minimum set pressure value:

   - a incrementation of the set pressure value,
   - a stabilizing of the pressure and acquisition of the value thereof,
   - analog measurement of the flow rate,
   - determination of the digital value of the flow rate by multiplexing of the output voltages of the amplifiers with analog-to-digital conversion of said voltages, and correction, if necessary, of the results in order to factor in variations in gain between the amplifiers,
   - storage of the measured pressure / flow rate couple in a memory associated with the processor.

7. Permeameter as claimed in any preceding claim, **characterized in that** the processor computes the coefficient of "persillage" characterizing the flow rate / pressure relation in accordance with the following process:

   - the successive establishing, in the chamber, of pressures of 0.25 kPA and 1.00 kPa;
   - the storing in the memory of the respective air flow rates $Q_1$ and $Q_2$ (cm$^3$ min$^{-1}$) measured;
   - computation of the ratio Y by means of the following formula:

$$Y = (Q_1/Q_2) \times (1.0/0.25)$$

- repetition of this procedure for several test pieces, and
- calculation of the average of the values obtained for value Y.


**Patentansprüche**

1.  Permeameter, versehen mit einem Messkopf (1) womit es ermöglicht ist, die Probe (4) mindestens teilweise und dicht zu verschließen, wobei dieser Messkopf (1) je zwei auf zwei verschiedene Seiten der Probe weisende Kammern enthält, eine dieser Kammern (CA) an eine Messleitung (6) angeschlossen ist, aufeinanderfolgend mindestens einen analogen Durchflussmesser (8) und ein Pumpelement (14) enthält, die dazu geeignet sind, in der Messleitung (6) einen Druck oder einen Niederdruck zu erzeugen, sowie Regelvorrichtungen (CP, R, 11) die dafür vorgesehen sind, um die Messleitung (6) auf einen bestimmten Druck zu halten, **gekennzeichnet dadurch, dass** dieser , einen elektronischen Verarbeitungsschaltkreis mit einer Vielzahl von kalibrierten Verstärkern ($A_1$... $A_n$) umfasst, wobei die Eingänge mit dem analogen Ausgang des Durchflussmessers (8) verbunden sind und die Ausgänge an die entsprechenden Eingänge eines Multiplexers (MUX) angeschlossen sind, die über einen Prozessor angesteuert (PC) werden, wobei der Ausgang dieses Multiplexers (MUX) an den Eingang eines Analog-Digital-Wandlers (ADC) angeschlossen ist, wobei der Ausgang an den Prozessor (PC) angeschlossen ist.

2.  Permeameter nach Anspruch 1, **gekennzeichnet dadurch, dass** der Prozessor (PC) so programmiert ist, um gleichzeitig die Steuerung des Multiplexers (MUX) und eines Druckwert-Generators (GC) der besagten Regelvorrichtungen (R) zu sichern.

3.  Permeameter nach einem der Ansprüche 1 und 2, **gekennzeichnet dadurch, dass** der Prozessor (PC) so programmiert ist, um die Durchlässigkeit des Gegenstandes nach dem festgesetzten Druckwert in der Messkammer (CA) und nach dem Sollwert, den er vom Analog-Digital-Wandler (ADC) in digitaler Form empfängt, zu errechnen.

4.  Permeameter nach einem der vorangehenden Ansprüche, **gekennzeichnet dadurch, dass** der Prozessor (PC) dem Multiplexer (MUX) die Ausgangsspannungen der Verstärker ($A_1$, $A_2$, $A_3$) auf den Eingang des Analog-Digital-Wandlers (ADC) zusteuert und in jedem Augenblick die höchste dieser Ausgangsspannungen, die aber niedriger als die Sättigungsspannung der genannten Verstärker ist, in Erwägung zieht.

5.  Permeameter nach Anspruch 2, **gekennzeichnet dadurch, dass** der besagte Druckwert-Generator (GC) von dem Prozessor angesteuert (PC) wird.

6.  Permeameter nach Anspruch 5, **gekennzeichnet dadurch, dass** der Prozessor so programmiert wird, um die Druckfluss-Kurve in einer Folge zu ermitteln, die aufeinanderfolgende Zyklen umfasst, wobei jeder ausgehend von einem Mindestdruck-Sollwert folgendes enthält:

    - eine Erhöhung ($\Delta$p) des Solldrucks,
    - eine Stabilisierung des Drucks und Erfassung seines Wertes,
    - Messung des analogen Sollwertes
    - die Ermittlung des Sollzahlenwerts durch Multiplexierung der Verstärker-Ausgangsspannungen ($A_1...A_n$), mit Analog-DigitalWandlung der besagten Spannungen, und eventuelle Korrektur der Ergebnisse zur Berücksichtigung der Gewinnschwankungen zwischen den Verstärkern ($A_1...A_n$),
    - Speicherung des gemessenen Druckmoments/Durchflussmenge in einem dem Prozessor (PC) zugeordneten Speicher.

7.  Permeameter gemäß einem der vorangehenden Ansprüche, **gekennzeichnet dadurch, dass** der Prozessor (PC) den das Verhältnis Durchflussmenge/ Druck kennzeichnenden Verfolgungs-Köeffizienten im Einklang mit folgendem Vorgang errechnet:

    - aufeinanderfolgende Erzeugung von Solldrükken von 0,25 kPa und 1,00 kPa in der Kammer (CA),
    - Speicherung der entsprechenden aufgenommenen Luftdurchflussmengen $Q_1$ und $Q_2$ ($cm^3min^{-1}$)
    - Berechnung des Verhältnisses Y durch die Formel:

$$Y = (Q_1 / Q_2) \times (1,0 / 0,25)$$

    - Wiederholung dieses Vorgangs für mehrere Proben, und
    - Berechnung des Durchschnitts der somit erhaltenen Werte Y.

FIG.1

EP 0 932 036 B1

# FIG.2

EP 0 932 036 B1